Europäisches Patentamt

European Patent Office

Office européen des brevets

(19)

(11) Numéro de publication: **0 263 738**
**A1**

## (12) DEMANDE DE BREVET EUROPEEN

(21) Numéro de dépôt: **87402115.7**

(22) Date de dépôt: **22.09.87**

(51) Int. Cl.⁴: **A 22 C 25/00**
**A 22 C 25/14**

(30) Priorité: **26.09.86 FR 8613640**

(43) Date de publication de la demande:
**13.04.88 Bulletin 88/15**

(84) Etats contractants désignés:
**AT BE CH DE ES FR GB GR IT LI LU NL SE**

(71) Demandeur: **STELA-INOX Société Anonyme:**
**Route de Nozay**
**F-44130 Blain (FR)**

(72) Inventeur: **Lagord, Yves**
**9 rue Kléber**
**F-44260 Savenay (FR)**

(74) Mandataire: **Phélip, Bruno et al**
**c/o Cabinet Harlé & Phélip 21, rue de la Rochefoucauld**
**F-75009 Paris (FR)**

(54) **Procédé traitement du poisson par dépeçage et dispositif pour la mise en oeuvre du procédé.**

(57) Le procédé de traitement de poissons du genre squale consiste, selon une disposition de l'invention :
- à positionner le poisson à plat et sur le ventre, tête en avant, au poste de réception (6) de l'installation de traitement ;
- à l'agripper par les yeux audit poste de réception 6, pour le positionner dans un premier temps, au poste de préparation 9 où seront réalisées les opérations de découpage des nageoires et de la peau derrière la tête en vue du dépeçage, et les opérations de fendage du ventre et d'éviscération, puis dans un deuxième temps, au poste de finition 180, où seront tranchées simultanément la tête et la queue ;
- à repérer sa longueur pendant son transfert du poste de réception 6 vers le poste de préparation 9 ;
- à dépecer le poisson pendant son transfert du poste de préparation 9 vers le poste de finition 18.

L'installation de traitement pour la mise en oeuvre du procédé peut comprendre : - un poste de réception 6 où le poisson est positionné sur une chaîne de transfert 3, au moyen d'index, - un poste de préparation 9 où s'effectuent les opérations de tranchage des nageoires, de découpage de la peau, de fendage et d'éviscération, - un poste de finition 19 où s'effectue la séparation de la tête et de la queue, du reste du corps du poisson.

Fig.3.

EP 0 263 738 A1

**Description**

PROCEDE DE TRAITEMENT DU POISSON PAR DEPECAGE ET DISPOSITIF POUR LA MISE EN OEUVRE DU PROCEDE

La présente invention concerne un procédé de traitement du poisson, par dépeçage, et le dispositif pour la mise en oeuvre dudit procédé.

Le procédé de traitement selon l'invention s'applique au poisson du genre squale et plus particulièrement au poisson connu sous le nom commun d'aiguillat que l'on rencontre habituellement en mer Méditerranée et dans l'océan Atlantique.

Le traitement de ce type de poisson s'effectue le plus souvent à la main dans des conditions extrêmement difficiles et pénibles à cause de l'opération de dépeçage.

L'invention a pour but d'automatiser ce traitement du poisson en réalisant tout d'abord, de façon automatique, cette opération difficile de dépeçage et, également, d'autres opérations comme la séparation de la tête, des viscères et de la queue, ce qui permet, selon le cas, une grande simplification des tâches des opérateurs.

l'invention propose en effet un procédé graduel de traitement du poisson qui tient compte des possibilités de préparations préalables du poisson. Selon les cas, le poisson peut recevoir un traitement manuel préalable qui peut consister à enlever par exemple les nageoires dorsales et/ou la queue et/ou encore les tripes. Le procédé selon l'invention et l'installation qui en découle, pour la mise en oeuvre, sont donc particulièrement adaptés.

Le procédé de traitement selon l'invention consiste :
- à positionner le poisson à plat et sur le ventre, tête en avant, au poste de réception de l'installation de traitement ;
- à l'agripper par les yeux pour le transférer du poste de réception au poste de finition ;
- à attraper une languette de peau pour le dépecer par retournement depuis la tête, jusqu'à la queue, pendant son transfert du poste de réception au poste de finition ;
- à trancher la tête au poste de finition.

Selon une première variante de l'invention, le procédé de traitement consiste :
- à positionner le poisson à plat et sur le ventre, tête en avant, au poste de réception de l'installation de traitement ;
- à l'agripper par les yeux pour le transférer du poste de réception à un poste de préparation où seront réalisées les opérations de découpage d'une languette de peau derrière la tête et de tranchage des ouïes ;
- à transférer le poisson du poste de préparation au poste de finition ;
- à attraper la languette de peau pour le dépecer par retournement depuis la tête jusqu'à la queue pendant son transfert du poste de préparation au poste de finition ;
- à trancher la tête au poste de finition.

Selon une autre variante de l'invention, le procédé de traitement consiste :
- à positionner le poisson à plat et sur le ventre, tête en avant, au poste de réception de l'installation de traitement ;
- à l'agripper par les yeux audit poste de réception, pour le positionner, dans un premier temps, au poste de préparation où seront réalisées les opérations de découpage des nageoires et de la peau derrière la tête en vue du dépeçage, et les opérations de fendage du ventre et d'éviscération, puis dans un deuxième temps, au poste de finition, où seront tranchées simultanément, la tête et la queue ;
- à repérer sa longueur pendant son transfert du poste de réception vers le poste de préparation ;
- à attraper la languette de peau derrière la tête, pour dépecer le poisson pendant son transfert du poste de préparation vers le poste de finition.

Selon une autre disposition de l'invention le procédé consiste, lors de l'opération de pré-découpe des nageoires dorsales, à réaliser un cisaillage latéral dans un plan sensiblement horizontal et, lors de l'opération de pré-découpe des ouïes, à réaliser un tranchage de chaque côté du corps, successivement, de haut en bas, dans des plans disposés en V de part et d'autre du plan vertical médian, ces plans passant respectivement par les points arrière de la languette et l'extrémité arrière inférieure de la tête, de façon à réaliser une séparation totale de la peau par rapport à la tête.

Toujours selon l'invention le procédé consiste à effectuer un fendage de la peau depuis la queue jusqu'à l'extrémité arrière inférieure de la tête, pour permettre l'éviscération par préhension des tripes au niveau de la tête.

Selon une autre disposition de l'invention le procédé consiste à positionner les organes de découpe des nageoires dorsales en fonction de la longueur du poisson et de sa hauteur ; et à positionner le système de tension de la queue, en fonction de la position de l'organe de découpe de la nageoire dorsale arrière.

Selon l'invention le procédé consiste encore à dépecer le poisson jusqu'à la queue selon la longueur repérée initialement.

L'invention concerne également l'installation de traitement du poisson, pour la mise en oeuvre du procédé.

L'installation selon l'invention comprend :
- un poste de réception où le poisson est positionné sur une chaîne de transfert, au moyen d'organes qui l'agrippent au niveau des yeux ;
- selon le cas, un poste de préparation où s'effectuent les diverses opérations de tranchage des nageoires, éviscération, découpage d'une languette de peau et des ouïes, derrière la tête ;
- des moyens pour attraper et retenir temporairement une languette de peau derrière la tête en vue de réaliser le dépeçage pendant le transfert du poisson du poste de réception au poste de finition.
- un poste de finition où s'effectue le tranchage de la tête et éventuellement de la queue.

Selon une disposition préférentielle de l'invention, l'installation comprend des moyens de repérage de la longueur du poisson lors de son transfert du poste de réception au poste de préparation.

Selon une autre disposition de l'invention, l'installation comprend des moyens de découpage d'au moins une languette de peau sur la tête du poisson, au poste de préparation, et des moyens pour saisir cette languette lors du transfert du poisson dudit poste de préparation au poste de finition.

L'installation comprend encore des bacs successifs destinés à recueillir selon le cas respectivement, tout d'abord les viscères, ensuite la peau sur laquelle sont éventuellement accrochées les nageoires dorsales et la queue, puis le corps du poisson, et enfin la tête du poisson.

Selon une variante de l'invention, l'installation peut comporter, en lieu et place des bacs successifs, des convoyeurs situés à des niveaux différents pour recueillir respectivement les viscères, le corps du poisson, et la tête.

L'invention sera mieux comprise à l'aide de la description suivante et des dessins annexés, donnés à titre indicatif, et dans lesquels :

- la figure 1 est une vue d'ensemble schématique, montrant l'implantation des différents organes de l'installation de traitement de simple dépeçage du poisson ;

- la figure 2 représente, comme la figure 1, une installation de traitement permettant le dépeçage après une préparation du poisson liée à cette opération de dépeçage ;

- la figure 2a représente une variante de réalisation des moyens de récupération des différentes parties du poisson après son traitement ;

- la figure 3 est une vue d'ensemble schématique, comme les figures 1 et 2, montrant l'implantation des différents organes de l'installation selon l'invention, pour une machine de traitement totalement automatique ;

- la figure 4 représente, en vue de dessus, le poste de réception du poisson ;

- la figure 5 représente une vue partielle, latérale, du poste de réception ;

- la figure 6 représente, dans un plan vertical perpendiculaire au sens du déplacement du poisson, le système de pinces pour la préhension de la queue ;

- la figure 7 représente, en vue de dessus, les moyens permettant de déplacer les pinces de préhension de la queue du poisson ;

- les figures 8, 8a, 9, 9a, 10, 11 et 12 représentent le système de découpe des nageoires dorsales du poisson ;

- la figure 13 représente le système de découpe des ouïes du poisson ;

- la figure 13a représente, en coupe, les lames de découpe des ouïes ;

- la figure 14 représente, en vue de dessus, la tête du poisson, avec les empreintes des lames de découpe des ouïes ;

- la figure 15 représente, dans un plan vertical perpendiculaire au sens de déplacement du poisson, le dispositif de découpe de la languette de peau, sur la tête du poisson ;

- la figure 16 est une vue de dessus du dispositif de découpe représenté figure 15 ;

- la figure 17 représente, en vue de côté, le système de préhension de la languette de peau découpée sur la tête du poisson ;

- la figure 18 représente le dispositif de tranchage de la tête ou de la queue ;

- la figure 19 représente, latéralement les lames du dispositif de tranchage de la tête ou de la queue ;

- la figure 20 est une vue latérale du dispositif de fendage du ventre du poisson et d'éviscération ;

- la figure 21 est une vue de dessus du système de fendage et d'éviscération représenté figure 20 ;

- la figure 22 est une vue selon 22-22 de la figure 21 montrant le dispositif d'étripage ;

- la figure 23a représente une pince d'étripage munie d'un tranchant ;

- la figure 23b représente l'autre pince d'étripage ;

- la figure 24 représente le système de fendage et d'éviscération avec son organe de manoeuvre.

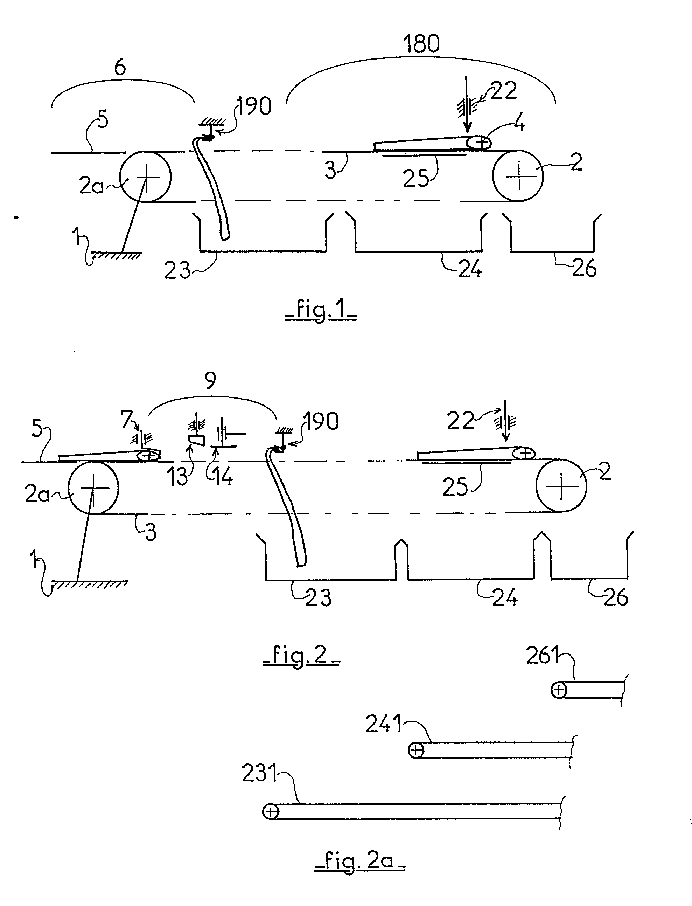

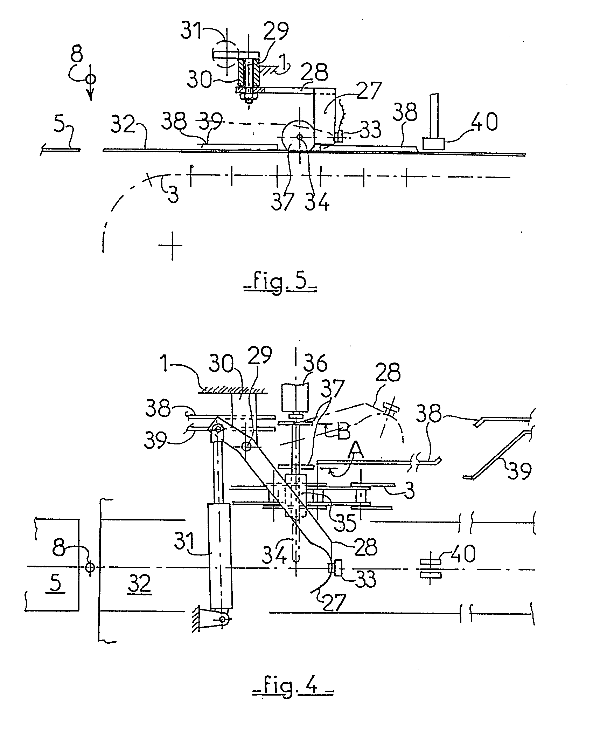

L'installation de préparation du poisson, représentée figure 1, est repgroupée sur un châssis 1 figuré au moyen de traits courts obliques. Ce châssis 1 supporte des moyens d'avancement du poisson constitués de deux tambours 2 disposés à chaque extrémité du châssis, lesquels tambours entraînent deux chînes 3 sur lesquelles sont fixés, à intervalles réguliers, des moyens 4 assurant l'entraînement du poisson. Ces moyens d'entraînement 4 seron détaillés figure 4 et 5.

Le poisson est introduit dans l'installation de traitement, au niveau de la table 5 de réception située en avant du tambour 2a. Depuis cette table 5, le poisson est mis en place au poste de réception 6 qui comprend des moyens de centrage de la tête, détaillés plus loin, et des moyens pour mettre en oeuvre les organes 4 d'entrainement et de transfert du poisson.

En même temps qu'il est centré et indéxé, c'est-à-dire rendu solidaire de la chaîne de transfert 3, un système de pinces 190, directement solidaire du châssis 1, agrippe une languette de peau en vue de dépecer le poisson pendant son transfert du poste de réception 6 au poste de finition 180. Au poste de finition, la tête du poisson est tranchée par un couteau 22 disposé avant le tambour d'extrémité 2 de la chaîne de transfert des poissons. On remarque figure 1 que la peau du poisson tombe automatiquement dans un bac de récupération 23 disposé sous les chaînes de transfert après avoir été lâchée par le système de pinces 190. Le corps du poisson, positionné pour le tranchage de la tête sur un volet basculant 25, tombe, après ledit tranchage, dans un bac de réception 24 disposé lui aussi sous la chaîne de transfert. Après tranchage, la tête du poisson continue à être entraînée par les organes 4 qui la libère au dessus d'un bac de réception 26 disposé à l'extrémité du tambour d'entraînement de la chaîne de transfert.

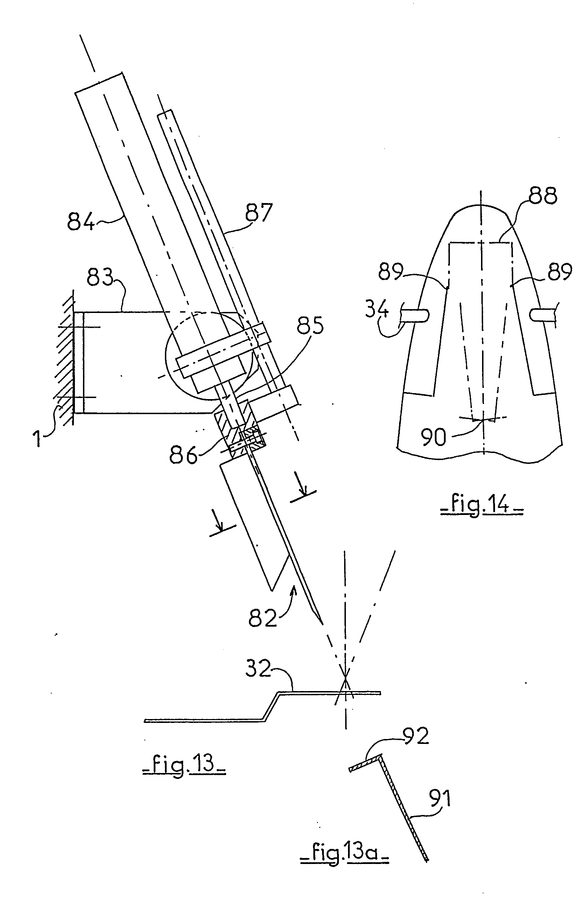

La figure 2 illustre une variante de réalisation de l'installation de traitement du poisson. Cette installation comporte un poste de préparation 9 du poisson. Cette préparation consiste essentiellement en un découpage, au moyen des couteaux 13, des ouïes du poisson et, au moyen du disque 14 d'une languette de peau sur la tête dudit poisson. Cette languette, détaillée figure 14, permet une préhension de la peau par le système de pinces 190.

On remarque encore, sur la figure 2, au poste de réception, les moyens 7 de centrage de la tête du poisson qui permettent la mise en place des organes 4 d'entraînement et de transfert du poisson de poste en poste.

Le poisson est traité de la même façon que dans le cas de l'installation figure 1. La peau est reçue dans un bac 23 suivi d'un bac 24 qui reçoit le corps du poisson, et d'un bac 26 destiné à recevoir la tête.

On a représenté figure 2a, de façon schématique, un système convoyeur destiné à remplacer les différents bacs 23, 24 et 26 précités. Un convoyeurs 261, disposé en partie supérieure, est destiné à récupérer les têtes de poisson. Ce convoyeur 261 se positionne à la place du bac de réception 26.

Un second convoyeur 241, situé sous le convoyeur 261 est destiné à évacuer le corps du poisson. Il se positionne en lieu et place du bac 24, sous la trappe basculante 25.

Un troisième convoyeur 231, destiné à recevoir la peau du poisson après dépeçage, est disposé sous le convoyeur 241, en lieu et place du bac de réception 23.

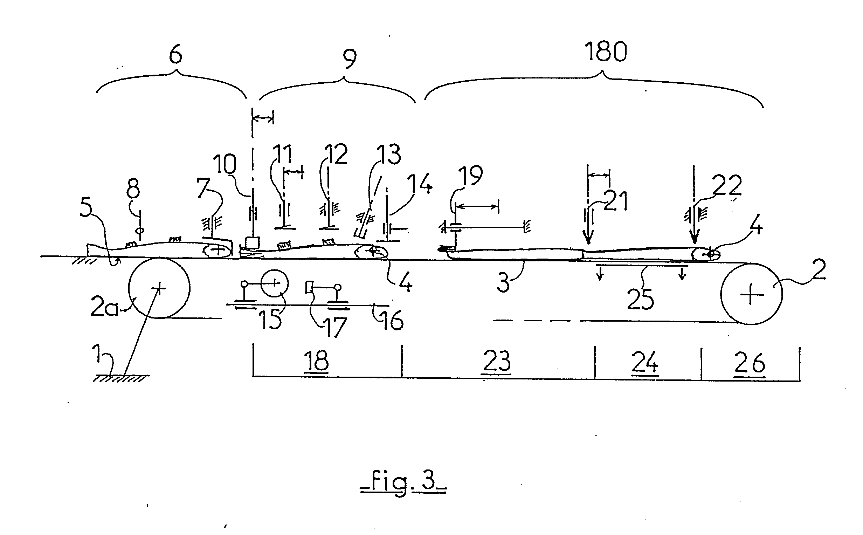

La figure 3 repésente une installation complète de traitement automatique du poisson, selon l'invention. Cette installation comprend, regroupés sur un châssis 1, des moyens d'avancement du poisson, constitués, comme figure 1 et 2, de deux tambours 2 qui entraînent deux chaînes de transfert 3 sur lesquelles sont fixés, à intervalles réguliers, des moyens 4 assurant l'entraînement du poisson. Ces moyens d'entraînement 4 sont détaillés plus loin figure 4 et 5.

Le poisson est introduit dans l'installation de traitement, au niveau de la table 5 de réception, située en avant du tambour 2a. Depuis cette table 5, le poisson est mis en place au poste de réception 6 qui comprend des moyens 7 de centrage de la tête, des moyens pour mettre en oeuvre les organes 4 d'entraînement et de transfert du poisson, et des moyens 8 permettant de repérer la longueur du poisson.

Dès que le poisson est centré et indexé, c'est-à-dire rendu solidaire de la chaîne 3, il est transféré du poste de réception 6 au poste de préparation 9. Pendant son transfert, la longueur du poisson est repérée par les moyens spécifiques 8, de façon à positionner divers organes dont il sera question plus loin. Le mouvement de la chaîne 3 est un mouvement séquentiel qui assure le déplacement du poisson de poste en poste.

Le poste de préparation 9 comprend, dans l'ordre selon lequel le poisson les voit défiler : des pinces 10 de préhension de la queue, des couteaux 11 de cisaillage des nageoires dorsales arrière, des couteaux 12 de cisaillage des nageoires dorsales avant, des couteaux 13 de tranchage des ouïes, un disque 14 de découpage, sur la tête du poisson, d'une languette de peau qui apparaît figure 14.

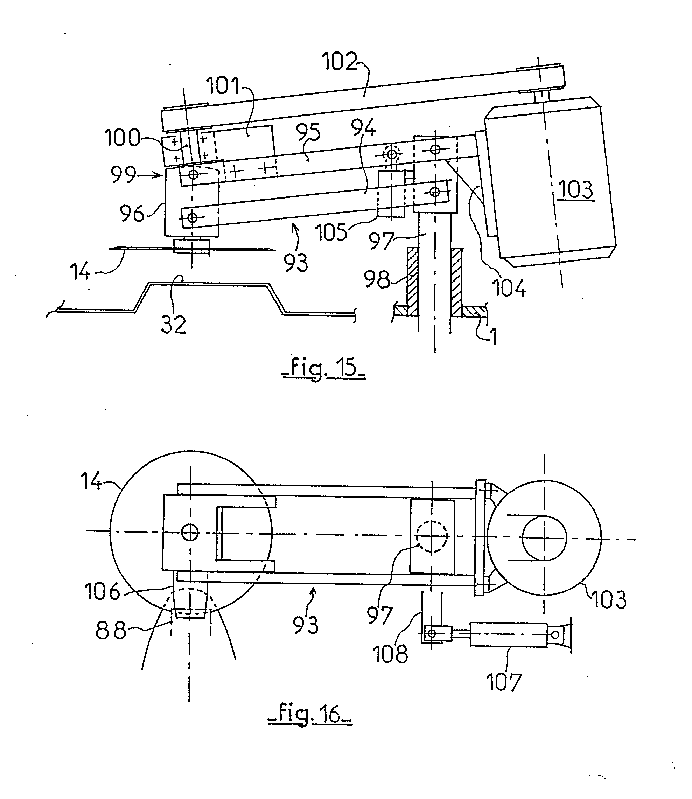

A ce poste de préparation 9 le poisson est maintenu au niveau de la tête par les organes de transfert 4 et il est mis sous tension au moyen des pinces 10 dont la position est réglable en fonction de la longueur du poisson, repérée par les moyens spécifiques 8 du poste de réception 6. Avant de mettre les pinces 10 en action pour tendre le poisson, le disque 14 découpe la languette de peau sur la tête du poisson. Ce disque 14 et ses moyens de commande sont détaillés figures 15 et 16 ; il est animé d'un mouvement vertical pour laisser passer le poisson pendant son transfert et d'un mouvement longitudinal pour réaliser la découpe.

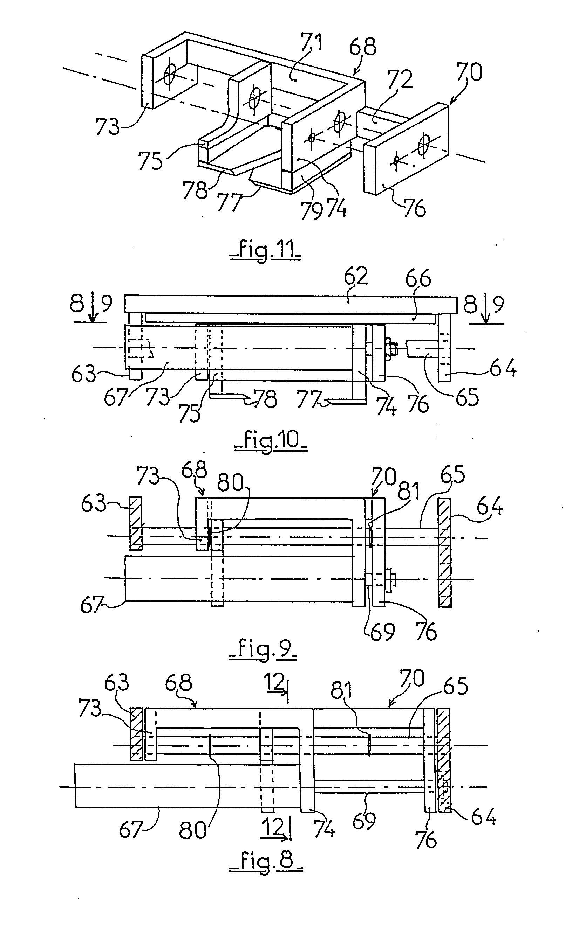

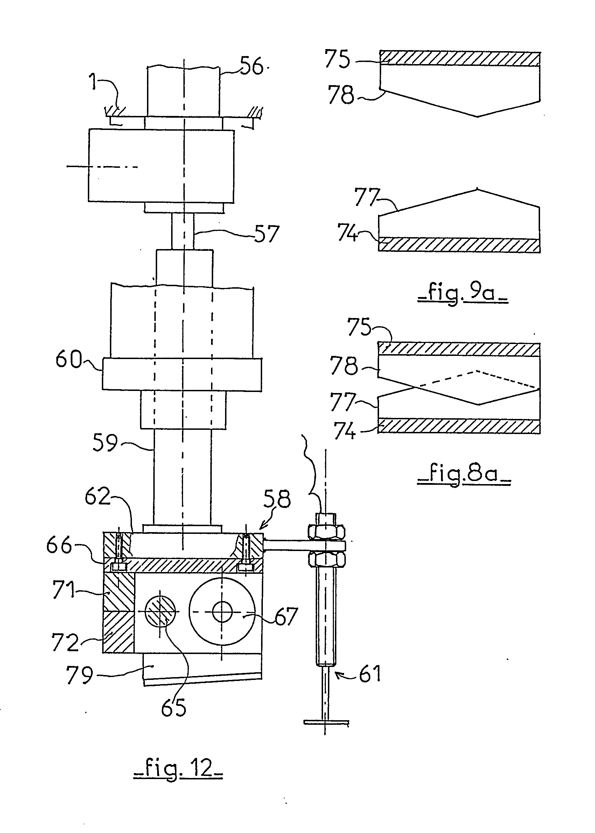

Les couteaux 11 et 12 pour le cisaillage des nageoires dorsales sont détaillés figures 8 à 12 ; ils sont réglables longitudinalement en fonction de la longueur du poisson. Ce réglage s'effectue automatiquement et il sert, en même temps, au réglage de la position des pinces 10. Une paire de couteaux 13 réalise le tranchage des ouïes du poisson. Ces couteaux sont disposés de part et d'autre du plan vertical longitudinal ; ils se déplacent chacun dans des plans inclinés par rapport à ce plan longitudinal médian ; l'intersection de ces deux plans inclinés, avec ledit plan médian, est une droite non horizontale, mais inclinée de bas en haut dans le sens d'avancement du poisson. Les couteaux latéraux 13 réalisent en fait des découpes de la peau du poisson, tout autour de la tête.

Les couteaux 11 et 12 de cisaillage des nageoires dorsales avant et arrière laissent lesdites nageoires, après découpage, rattachées à la peau du poisson.

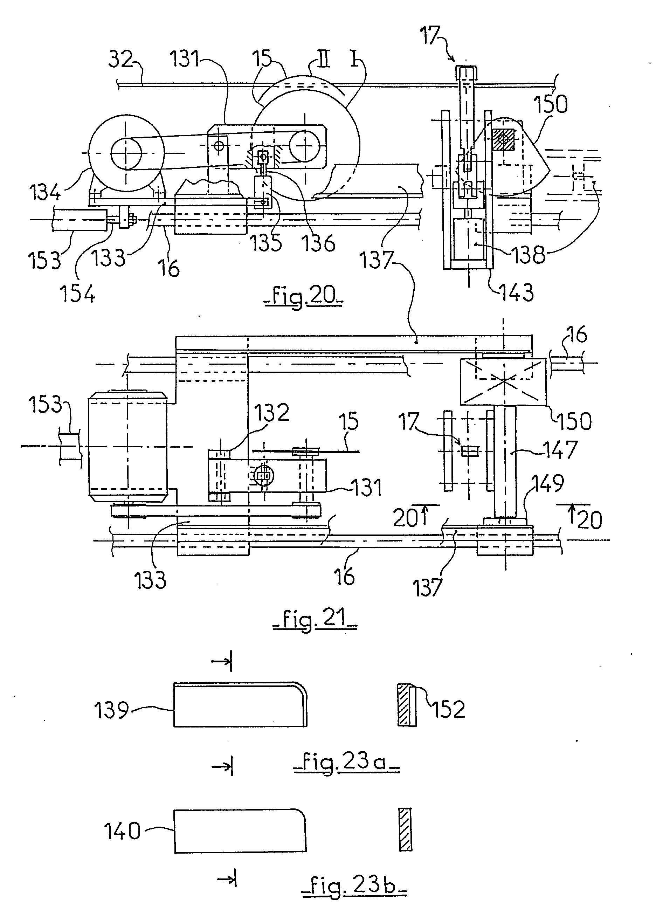

Le poste de préparation 9 comprend encore des moyens pour réaliser le fendage du ventre du poisson ainsi que son éviscération. Ces moyens sont disposés sous le poisson ; ils sont constitués d'un disque 15 de fendage mobile longitudinalement sur une glissière 16 solidaire du châssis ; des pinces 17 mobiles en rotation autour d'un axe perpendiculaire au sens de déplacement du poisson agrippent les viscères juste derrière la tête du poisson et, dans un mouvement circulaire dont la phase initiale consiste en une traction vers l'arrière, ces pinces 17 arrachent les viscères et les déposent dans un bac 18 disposé sous l'installation. Le disque de fendage 15 et les pinces 17 sont montés sur un même chariot coulissant sur la glissière 16 ; le mouvement de ce chariot est séquentiel pour réaliser tout d'abord l'opération de fendage du ventre, il effectue ensuite un retour en arrière pour amener les pinces 17 dans une position permettant la préhension des viscères derrière la tête ; après le mouvement d'arrachage des viscères par basculement des pinces 17, le chariot retourne à sa position de départ où les pinces relâchent les viscères. Ces moyens de fendage du ventre puis d'éviscération seront détaillés plus loin, figures 20 à 24.

Lorsque cette préparation du poisson est terminée, il est transféré du poste 9 au poste de finition 180, au moyen de la chaîne 3 et des organes de transfert 4. Avant de démarrer le transfert du poisson, les pinces 10 relâchent la queue. Au début de l'opération de transfert, la languette de peau est saisie et maintenue agrippée par un système de pinces 19 de façon à dépecer le poisson, par retournement de la peau, pendant son transfert du poste de préparation 9 au poste de finition 180. Le système de pinces 19 est mobile sur une glissière 20 solidaire du châssis 1 ; la course de ces pinces est réglée en fonction de la longueur du poisson repérée au poste de réception 6.

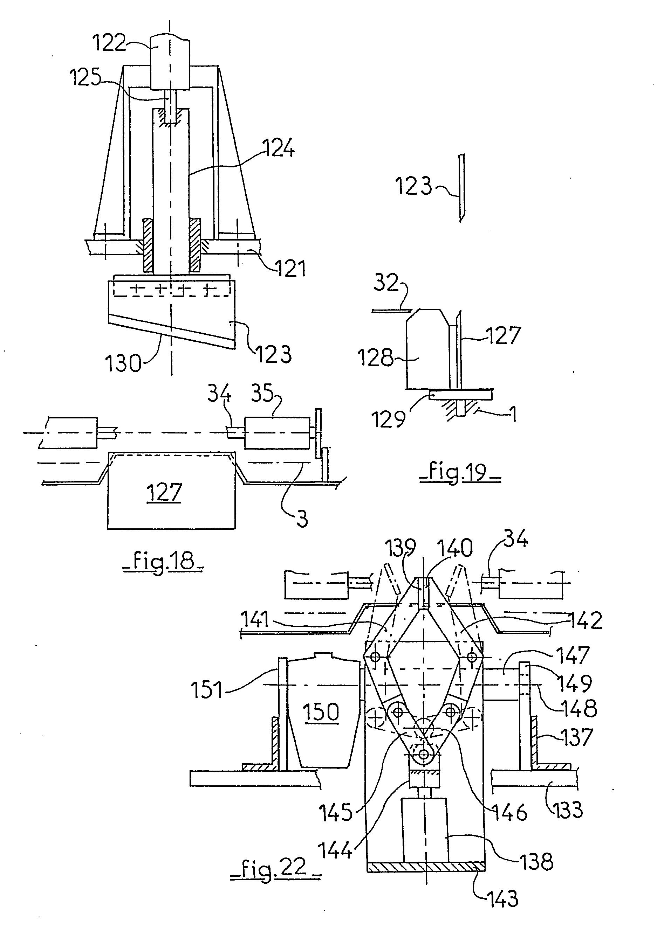

Lorsque le poisson est positionné au poste de finition 180, au moyen de la chaîne de transfert 3 et des organes 4 qui maintiennent la tête, des couteaux 21 et 22 réalisent, simultanément, et respectivement, le tranchage de la queue et le tranchage de la tête. Ces couteaux 21 et 22 sont identiques ; ils sont détaillés figures 18 et 19 plus loin.

Lorsque la queue du poisson est tranchée, le système de pinces 19 à dépecer, relâche la peau à laquelle sont accrochées d'une part, les nageoires dorsales et, d'autre part, la queue qui vient d'être tranchée ; le tout tombe dans un bac 23. Le corps du poisson tombe dans un bac 24 après basculement d'un volet 25 de maintien. La tête du poisson tombe dans un bac 26, dès que les organes de transfert 4 la relâchent ; ce relâchement s'effectue automatiquement lorsque la chaîne de transfert 3 se met en mouvement pour faire avancer un nouveau poisson.

Lorsque l'installation est en fonctionnement normal on trouve un poisson au poste de réception, prêt à être pris en charge par les organes 4 de la chaîne de transfert 3 ; un poisson au poste de préparation et un poisson au poste de finition. Toutes les opérations s'enchainent de façon séquentielle par des moyens de contrôle de positionnement approprié. Des moteurs pas à pas assurent les principaux déplacements, ainsi que des vérins. A noter que pour réduire l'encombrement longitudinal de la machine, le poisson est indexé au poste de réception au cours du transfert du poisson précédent du poste de préparation vers le poste de finition, pendant son dépeçage.

La figure 4 représente, en détail, le poste de préparation 6 et en particulier les moyens de centrage et d'indexation du poisson ainsi que le système de repérage de longueur. Le poisson est amené manuellement ou automatique ment au poste de réception et il est positionné contre une butée 27 dont la forme est adaptée à la forme de la tête du poisson, cette butée étant solidaire d'un bras escamotable 28 articulé latéralement, sur un axe 29 vertical solidaire d'un support 30 fixé au châssis 1. Le mouvement du bras 28 est assuré par un vérin 31 disposé notamment au-dessus de la sole 32 sur laquelle est positionné le poisson. La butée 27 comporte à sa partie basse, un contacteur 33 pour la détection de la présence d'un poisson au poste de réception. Lorsqu'un poisson est en place contre la butée 27, des index 34, disposés symétriquement de chaque côté du poisson, peuvent se mettre en place pour assurer une solidarisation du poisson par rapport aux chaînes de transfert 3. Ces index 34 sont en forme de tiges métalliques pointues, guidées dans des supports 35 solidaires des maillons de la chaîne 3 ; ces index sont mobiles transversalement entre une position inactive repérée B sur la figure 4 et une position active repérée A sur cette même figure. La mise en place des index 34 en position active A, s'effectue au moyen de vérins 36 solidaires du châssis 1 disposés de chaque côté, latéralement. Ces vérins agissent sur l'extrémité des index 34 ; cette extrémité étant constituée d'un disque 37 dont le rôle sera explicité ci-après. Les index 34 sont en fait poussés, par les vérins 36 pour pénétrer dans la tête du poisson, au niveau des yeux. Lorsque les index sont en position active, repérée A, les vérins 36 se rétractent les laissant en position active A. Lorsque la chaîne de transfert 3 avance, elle entraine les supports 35 des index 34 et le disque 37, disposé à l'extrémité des index 34, se trouve prisonnier au moyen d'un guide longitudinal 38, disposé de chaque côté de la sole 32, au delà desdites chaînes de transfert 3. Tout au bout de l'installation, les disques 37 seront écartés au moyen d'un guide 39 qui fera passer les index 34 de la position active à la position inactive et ces mêmes disques seront maintenus en position inactive pour le retour du poste de finition au poste de réception, entre le guide 38 et le guide 39, tels qu'ils apparaissent sur la figure 4, à gauche du disque 37 en position inactive B.

On remarque, figure 5, la position surélevée du bras de maintien de la butée 27, de façon à permettre le passage du poisson. Le contacteur 33 est disposé en bas de la butée 37 au niveau de l'extrémité de la tête du poisson. On distingue également les index 34 et le disque 37 ainsi que les guides 38 et 39. On a fait apparaître également figure 5, la sole 32 sur laquelle repose le poisson et en bordure de laquelle, décalées vers le bas, se situent les chaînes de transfert 3. On remarque encore figures 4 et 5, à gauche du système de centrage du poisson, les moyens de repérage de la longueur dudit poisson. Ces moyens 8 sont de type cellule photo-électrique.

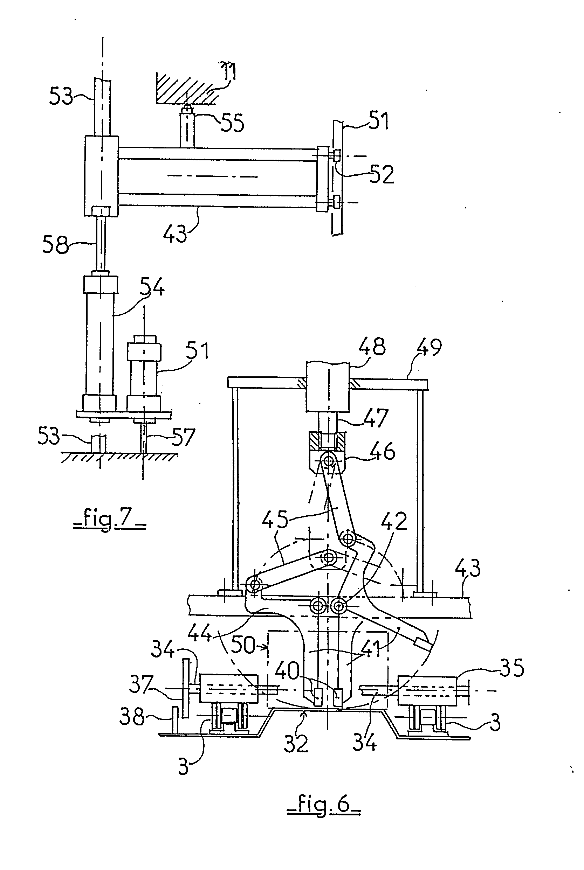

Lorsque la tête du poisson est positionnée contre la butée 27, le contacteur 33 initialise un cycle qui autorise la mise en place des index 34, puis le dégagement du bras 28 avec sa butée 27 au moyen du vérin 31 de façon à l'escamoter dans la position représentée en traits fins ; le poisson est alors prêt pour être transféré du poste de réception 6 au poste de préparation 9. Dès le départ du poisson, du poste de réception 6, sa longueur est repérée par les moyens 8 et cette longueur est mémorisée et utilisée pour positionner les différents organes mobiles et en premier lieu les mâchoires 40 de la pince 10, qui apparaissent figures 4 et 5, mais dont le détail est donné figures 6 et 7.

Sur la figure 6, la pince est représentée en projection sur plan perpendiculaire au sens du déplacement du poisson. Sur cette figure on distingue la sole 32 sur laquelle repose le poisson, ainsi que les chaînes de transfert 3 disposées latéralement et légèrement en retrait vers le bas. On distingue encore les supports 35 solidaires des chaînes de transfert 3 qui servent à guider les index 34 enfoncés dans la tête du poisson, et l'un des rails 38 de maintien du disque 37 solidaire de l'extrémité de l'index 34.

Les mâchoires 40 de la pince 10 sont montées sur des bras pivotants 41, lesquels bras sont articulés autour d'axes 42 parallèles au sens du déplacement du poisson et solidaires d'un châssis 43 mobile dans le sens du déplacement du poisson. On remarque que les bras 41 des mâchoires 40 sont en forme d'équerres, s'écartant vers l'extérieur. Les parties 44 en équerre des bras 41, sont reliées au moyen de biellettes 45 à une chape 46 fixée à l'extrémité de la tige 47 d'un vérin 48 disposé dans le plan médian de l'installation au-dessus du support 43 des mâchoires 40, et maintenu au moyen d'un portique 49 sur ledit support 43. Les deux positions active et inactive des pinces sont représentées l'une en traits forts, l'autre en traits fins pour un seul côté, respectivement.

On remarque encore figure 6, représenté en traits mixtes fins, le cadre 50 dans lequel s'inscrit le poisson et qui correspond à l'encombrement maximal d'un poisson pouvant être traité dans l'installation.

On a représenté figure 7, le système de réglage de la position des pinces 10, en fonction de la longueur du poisson repérée par les moyens 8 du poste de réception 6. Le support 43 du mécanisme des pinces, est guidé en translation, dans le sens du déplacement du poisson, sur un rail 51 à galets 52 d'un côté et, de l'autre côté sur un simple rail de guidage cylindrique 53. Le support 43 est mobile sous l'effet d'un premier vérin à longue course 54 qui réalise le déplacement principal du cadre 53 afin de l'amener en appui au moyen de la butée 55 solidaire du cadre 43, sur le dispositif 11 de cisaillage des nageoires dorsales arrière du poisson. Ce dispositif 11 est mis en place comme il sera vu plus loin, au moyen d'un moteur pas à pas en fonction de la longueur du poisson qui a été préalablement mémorisée. La mise en place du dispositif 11 précède donc la mise en place du système de pinces 10. Lorsque le support 43 est positionné par rapport au dispositif 11, les mâchoires 40 se resserrent sur la queue au moyen du vérin 48 et une traction est exercée sur la queue du poisson pour le tendre, au moyen du vérin 56 dont la course est sensiblement égale à la moitié de la course du vérin 54. Tel que représenté figure 7, le vérin 56 est en position tige sortie complètement lorsque le vérin 54 est mis en action. Lorsque le vérin 56 est mis en action pour tendre le poisson, sa tige est rentrée en fonction de la traction voulue, et ce mouvement du corps du vérin 56 par rapport à sa tige 57 solidaire du châssis 1 provoque un déplacement du vérin 54 dont la tige 58 est immobilisée en position, ce qui entraine le support 43 des pinces et provoque par ailleurs une désolidarisation de la butée 55 par rapport au couteau 11.

Les figures 8 à 12 représentent le système de commande des couteaux 11 et 12 de cisaillage des nageoires dorsales du poisson. La différence entre les couteaux 11 et 12, réside dans le fait que le couteau 11 est mis en place en fonction de la longueur du poisson au moyen d'un moteur pas à pas alors que le couteau 12, pour le cisaillage de la nageoire dorsale avant, est réglable. Une fois réglé, selon le type de poisson, le couteau 12 reste en place quelle que soit la longueur repérée par les moyens 8 du poste de réception. Les couteaux 11 et 12 sont chacun actionnés par un vérin vertical 56 disposé dans le plan médian de l'installation et solidaire du bâti 1 ; la tige 57 du vérin 56 entraine, dans un mouvement vertical, la tête de cisaillage 58 détaillée plus loin. Cette tête de cisaillage 58 est entrainée par la tige 57 du vérin au moyen d'un manchon 59 coulissant dans un support 60 solidaire du châssis 1 de l'installation. La position des lames de cisaillage est réglée au moyen d'un palpeur 61 qui prend directement appui sur le dos du poisson ; ce palpeur 61 déclenche l'arrêt du mouvement de la tige 57 du vérin 56. Pour obtenir une meilleure et plus grande précision du positionnement des lames de cisaillage, le maintien en position de la tête de cisaillage 58 s'effectue par un système de blocage de la tige du vérin. La tête de cisaillage 58 comprend une platine support 62 horizontale disposée transversalement par rapport au sens d'avancement du poisson, solidaire du manchon coulissant 59. Cette platine 62 supporte au moyen de deux flasques 63 et 64 disposés respectivement à ses extrémités, une tige 65 horizontale de guidage disposée également dans le sens transversal. Sous la platine 62 on trouve une plaque horizontale 66 de guidage des éléments flottants sur lesquels sont fixées les lames de cisaillage. Ces éléments flottants sont représentés en perspective figure 9. Ils sont mus par un vérin 67 dont le corps est solidaire de l'élément flottant 68 et la tige 69 solidaire de l'élément flottant 70. Les deux éléments flottants 68 et 70 sont en forme de U imbriqués l'un dans l'autre au niveau de leurs âmes centrales 71, 72 qui relient les ailes respectives 73, 74 et 75, 76. Les lames de cisaillage 77 et 78 sont respectivement solidaires des ailes 75 et 74 intérieures des éléments 68 et 70 imbriqués l'un dans l'autre. Le corps du vérin 67 est solidaire de l'aile 74 de l'élément 68, c'est-à-dire une aile interne, alors que la tige 69 est solidaire de l'aile 76 de l'élément 70 ; cette aile 76 étant une aile externe. Les éléments 68 et 70 sont guidés d'une part, au moyen de la tige cylindrique 65 et, d'autre part, par leurs surfaces supérieures contre la plaque horizontale 66 fixée sous la platine support 62. La tige de guidage 65 est disposée entre le vérin 67 et les âmes 71, 72 des éléments 68 et 70 en U. Les lames 77 et 78 sont montées sur les ailes 74 et 75 par l'intermédiaire de cales 79 qui permettent de les écarter de leur support flottant afin de placer ce dernier suffisamment au-dessus du dos du poisson, et elles permettent notamment de modifier facilement, par simple remplacement, l'inclinaison longitudinale desdites lames selon la forme du dos du poisson.

On a représenté figure 8, la tête de cisaillage 58 en vue de dessus selon 8-8 et dans la position fermée ; les lames 77 et 78 se chevauchant comme représenté figure 8a. Sur cette figure 8, le vérin 67 apparaît avec sa tige 69 totalement sortie, les éléments 68 et 70, en forme de U, sont écartés au maximum ; leurs ailes respectives 73 et 76 sont en butée sur les flasques 63 et 64 de la platine support 62. La position des lames 77 et 78, par rapport à l'axe médian de l'installation, est automatiquement symétrique lorsque les ailes 73 et 74 sont en butée sur les flasques 63 et 64 respectivement.

On a représenté figure 9, la tête de cisaillage en vue de dessus selon 9-9 dans la position ouverte ; les lames 77 et 78 sont écartées comme il apparaît figure 9a et figure 10. La tige 69 du vérin 67 est totalement rentrée et les ailes 73 et 76 des éléments en U 68 et 70, sont en butée sur des circlips 80 et 81 positionnés sur la tige de guidage 65. Ces circlips 80 et 81 positionnés de façon à placer les lames 77 et 78 au repos, de façon symétrique par rapport à l'axe longitudinal de l'installation.

La figure 10 présente la tête de cisaillage dans la position ouverte, en projection sur un plan perpendiculaire à l'axe longitudinal de l'installation. On distingue les lames 77 et 78 fixées sur les ailes 74 et 75 des éléments en U 70 et 68 respectivement.

La figure 12 montre la tête de cisaillage 58 en coupe selon 12-12. On distingue les âmes 71 et 72 des éléments en U 68 et 70 ainsi que la tige cylindrique 65 de guidage, qui traverse l'aile 74 de l'élément en U 68, ainsi que le corps du vérin 67 solidaire de ladite aile 74. On remarque encore la cale 79 en forme de trapèze, fixée à l'aile 74 et qui reçoit la lame 77.

Les figures 8a et 9a font apparaître la forme des lames 77 et 78. Les tranchants de ces lames forment un V en pointe dont les deux branches sont de longueur inégale pour réaliser un cisaillage total de la nageoire tout en conservant une bande de peau non découpée qui maintient la nageoire ainsi découpée et la rattache au reste de la peau du poisson. La forme en V du tranchant permet également une réduction de l'effort de cisaillage.

A noter également que l'on peut prévoir, entre les âmes 71 et 72 un guidage au moyen de rails à galets et, de la même façon un guidage au moyen de galets entre la partie supérieure de l'âme 71 et la plaque horizontale 66 qui assure le guidage des éléments flottants sous la platine support 62.

La figure 13 représente l'un des couteaux 13 qui assure le tranchage des ouïes du poisson. Ce couteau comporte une lame 82 représentée figure 13a en forme d'équerre et l'on a représenté figure 14 la trace du découpage réalisé sur la tête du poisson. Le couteau comprend un support 83 solidaire du châssis 1 et un vérin 84 fixé au support de façon à pouvoir être réglé dans toutes les positions. La tige 85 du vérin est solidaire d'un organe 86 porte-lame sur lequel est fixée une tige 87 disposée parallèlement à l'axe du vérin et qui assure le guidage de la lame 82. On a représenté figure 13 la sole 32 sur laquelle est disposé le poisson, avec son plan médian. On remarque que dans son mouvement, la lame 82 passe de part et d'autre du plan médian de l'installation. Les couteaux 13 sont disposés symétriquement de chaque côté du plan médian et ils fonctionnent alternativement. Le but des couteaux 13 est de réaliser une séparation de la peau par rapport à la tête. On a représenté figure 14, l'empreinte réalisée par les lames 82 sur la tête du poisson et on a fait figurer également en traits mixtes fins, l'empreinte correspondant à la languette 88 de peau découpée par le disque 14 dont il sera question plus loin, figures 15 et 16. On remarque que l'empreinte laissée par les lames 82 passe par les extrémités 89 arrière de la languette 88 ; de sorte que sur le dessus de la tête, on a une continuité de la découpe de la peau. Du fait de leur déplacement, selon un plan incliné, les lames 82 traversent la tête du poisson et opèrent une découpe avec un croisement des lames, sous la tête du poisson. On a fait figurer également, figure 14, en traits mixtes fins, l'empreinte des lames 82 à la partie inférieure de la tête. Les lames 82 passent au moins par le point 90 qui correspond à l'extrémité arrière de la tête sous le poisson et, de préférence elles se chevauchent comme représenté figure 14, pour assurer un découpage en toute sécurité de la peau tout autour de la tête. La lame 82 comprend deux ailes 91 et 92 en équerre pour réaliser, en particulier avec l'aile en équerre 92, un véritable chevauchement des découpes réalisées à la partie inférieure du poisson. L'aile 92 a une largeur sensiblement égale au quart de celle de l'aile 91 et son tranchant fait un angle de 45° avec le sens du déplacement.

Dans le cas de l'intallation prévue figure 2, le tranchage des ouïes peut se faire de façon simplifiée avec des couteaux qui se présentent verticalement et non inclinés, compte tenu de l'intervention préalable et manuelle sur le poisson qui permet l'éviscération et, en même temps, le découpage de la peau du poisson, sous la tête.

On a représenté figures 15 et 16 le système de commande du disque 14 qui réalise, sur la tête du poisson, la découpe d'une languette de peau 88. La réalisation de cette languette s'effectue dès que le poisson arrive au poste de préparation 9, avant la mise en action des pinces 10 qui réalisent une tension sur le poisson.

Le disque 14 est solidaire d'un parallélogramme déformable 93 constituée de deux bras 94 et 95 parallèles, solidaires du moyeu 96 du disque 14 d'un côté, et de la partie supérieure d'un pivot 97 tournant dans une douille 98 solidaire du châssis 1 de l'installation. L'entrainement du disque 14 est réalisé par l'intermédiaire d'un joint de cardan 99, par un arbre moteur 100 monté, par l'intermédiaire d'un support 101, sur les bras supérieurs 95 du parallélogramme 93 ; cet arbre moteur 100 est relié, au moyen d'une courroie 102, à un moteur 103 fixé lui aussi par l'intermédiaire d'une platine 104, sur les bras supérieurs du parallélogramme 93.

Le disque 14 est mobile verticalement pour laisser passer le poisson lors de son transfert du poste de préparation au poste de finition, au moyen d'un vérin 105 dont le corps est fixé sur la partie supérieure du pivot 97 et la tige sur les bras supérieurs 95 du parallélogramme. Le rôle du vérin se limite à cette simple opération de dégagement vers le haut du disque. L'ensemble mobile constitué par le disque 14, son moyeu, son système d'entrainement et le parallélogramme 93 est équilibré, pour positionner automatiquement le disque à un niveau bas près de la sole 32. Un palpeur 106 disposé légèrement au-dessus du disque 14, et solidaire du moyeu 96, prend appui sur la tête du poisson, lors de sa mise en place au poste de préparation, et guide le mouvement vertical éventuel du disque 14 lors de l'opération de découpe de la languette. Par l'intermédiaire du pivot 97, le disque 14 se déplace sensiblement selon l'axe longitudinal médian de l'installation pour découper une languette de peau suffisante. Ce déplacement du disque résulte de l'action d'un vérin 107 qui agit par l'intermédiaire d'une biellette 108 à la base du pivot 97.

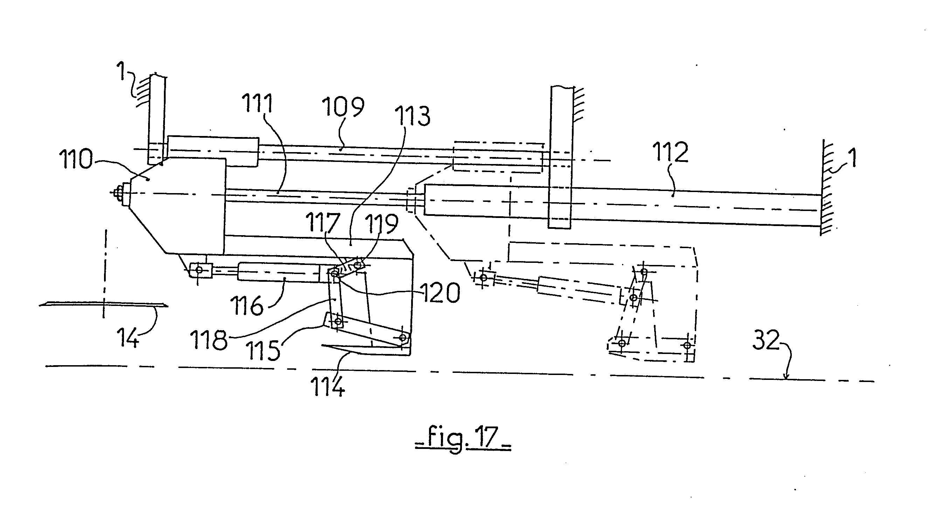

La figure 17 représente le système de pinces 19, 190 qui permet le dépeçage du poisson au moyen de la languette de peau 88 qui a été découpée sur la tête du poisson par le disque 14 qui apparaît en position escamotée. Dans le cas des installations décrites figures 1 et 2, ce système de pinces 190 est fixé directement sur le châssis 1. Dans le cas de l'installation complète, figure 3, ce système de pinces 19 est mobile longitudinalement sur une glissière 109 solidaire du châssis 1 et disposée à la partie supérieure du système. Un support 110, coulissant sur la glissière 109, est fixé à l'extrémité de la tige 111 d'un vérin 112 solidaire lui aussi du châssis 1. En position de départ, la tige 111 du vérin est totalement sortie comme représenté figure 15. Le support 110 comprend encore plus bas, un élément 113 en forme d'équerre sur lequel, à la partie basse de l'aile verticale on trouve les mâchoires 114 et 115 de la pince. La mâchoire 114 disposée à la partie basse est une mâchoire fixe, la mâchoire 115 est une mâchoire mobile actionnée par un vérin 116 disposé sous l'élément horizontal de l'équerre 112, au moyen d'un jeu de leviers 117 et 118 articulés pour l'un, dans l'angle 119 de l'équerre et l'extrémité 120 du vérin, et pour l'autre, sur ladite extrémité 120 du vérin et la mâchoire mobile 115.

On a également représenté figure 17 le système de pinces en traits mixtes fins en position active de dépeçage, c'est-à-dire que les mâchoires 114 et 115 sont fermées par le vérin 116.

Comme indiqué plus haut, au moment de la préhension de la languette, lorsque le poisson est transféré du poste de préparation au poste de finition, la tige 111 du vérin 112 est totalement sortie. Le poisson est transféré au poste de finition pour être placé dans une position précise qui est la même pour tous les poissons. En fonction de leur longueur, la pince 19 doit se situer dans une position telle qu'elle permette un retournement complet de la peau du poisson. La course de la tige 111 du vérin 112 est égale à deux fois la course prévue pour les pinces 10, les couteaux 11 et comme il sera montré plus loin les couteaux de queue 21. Lorsque le poisson est transféré du poste de préparation au poste de finition, la tige du vérin se positionne en fonction de la longueur du poisson, repérée initialement au poste de réception et, lorsque la peau a été totalement retournée jusqu'à la queue, la tige 111 est débloquée et elle accompagne le poisson, jusqu'à sa position prévue au poste de finition. Les mâchoires 114 et 115 de la pince continuent ainsi à maintenir, en souplesse, la languette 88 pour conserver une certaine tension sur le poisson avant de réaliser les opérations finales de tranchage de la tête et de la queue. Les mâchoires 114 et 115 ne relâchent la languette qu'après l'opération de découpe de la queue et de la tête. Lorsqu'elle relâche la languette, la peau tombe dans le bac 23 avec la queue ainsi que les nageoires dorsales avant et arrière qui restent fixées sur ladite peau. Dès que les mâchoires ont relâché la languette, elles sont replacées au moyen du vérin 112, à la position de départ, c'est-à-dire derrière le disque 14, la tige 111 du vérin étant totalement sortie.

La figure 18 et la figure 19 représentent les couteaux 21 et 22 destinés au tranchage de la queue et de la tête du poisson au poste de finition 180.

Comme il a été vu précédemment, ces couteaux 21 et 22 sont identiques au niveau du système de tranchage. Ils sont constitués d'un châssis 121 solidaire de l'installation, disposé au-dessus de la sole 32 sur laquelle est déplacé le poisson maintenu par les index 34 qui apparaissent figure 18 avec leurs supports 35 solidaires des maillons de la chaîne de transfert 3. Le châssis 121 supporte un vérin 122 de commande de la lame 123 des couteaux. Cette lame 123 est montée sur un coulisseau 124 solidaire de la tige 125 du vérin ; ce coulisseau est guidé verticalement en translation, dans une douille 126 solidaire du châssis 121.

On a représenté figure 19 la lame 123 ainsi que la contre-lame 127 solidaire d'un bloc 128 disposé sur une platine 129 solidaire du châssis 1 de l'installation.

La lame de tranchage 123 est en forme de trapèze rectangle ; son tranchant 130 est incliné par rapport à l'horizontale.

Comme il a été vu précédemment, le couteau 21 se déplace longitudinalement, au moyen d'un système de commande par moteur pas à pas, non représenté, en fonction de la longueur du poisson qui a été repérée, au poste de réception 6, par les moyens de repérage 8.

Le couteau 122 peut être déplacé pour adapter sa position au type de poisson à préparer sur l'installation ; il reste cependant fixe, dans la position choisie, quelle que soit la longueur du poisson repérée au poste de réception.

Le tranchage de la queue et de la tête s'effectue simultanément ; la queue du poisson part avec la peau, dans le bac 23 lorsque les mâchoires de la pince à dépecer 19 relâchent la languette de peau 88. Le corps du poisson bascule pour tomber dans un bac 24 situé sous l'installation après le bac 23. Le corps du poisson est maintenu pendant l'opération de tranchage sur un volet 25 qui bascule dès que cette opération de tranchage est terminée. La tête du poisson, maintenue par les index 34, tombe dans un bac 26 lorsqu'ils ont été rétractés, comme il a été vu figures 4 et 5, au moyen des guides 39 disposés de chaque côté de l'installation, lorsque la chaîne de transfert est mise en mouvement pour amener un autre poisson.

On a représenté figures 20 à 24, le système de fendage du ventre du poisson et le système de préhension des viscères après l'opération de fendage.

Sur la figure 20 on distingue le disque 15 de fendage du ventre du poisson, émergeant légèrement du niveau de la sole 32. Ce disque 15 est monté sur un axe horizontal perpendiculaire au sens de déplacement du poisson et maintenu par un bras 131 articulé autour d'un axe parallèle à celui du disque 15 et monté sur un support 132 solidaire du chariot 133 sur lequel est monté également le moteur 134 d'entraînement du disque 15 et, le système de pinces 17.

Le chariot 133 est disposé sous la sole 32 ; il se déplace longitudinalement sur des rails 16 qui courent sous la sole 32 de part et d'autre de l'axe longitudinal médian. Le disque 15 se situe dans le plan médian de l'installation. Le bras support 131 du disque 15 se déplace pour l'amener de la position inactive I, figure 20, à la position active de fendage II, sous l'effet d'un vérin 135 dont le corps est solidaire du chariot 133, sa tige 136 est articulée au centre du bras 131.

Le système de pinces 17 apparaît figure 20, selon la coupe simplifiée 20-20 ; il est disposé au-delà du disque 15, sur un bâti support 137 solidaire du chariot 133. Ce système de pinces 17 est constitué, figure 22, d'un vérin 138 qui assure la manoeuvre des mâchoires 139 et 140. Ces mâchoires sont fixées à l'extrémité supérieure de deux bras 141 et 142 montés dans un ensemble basculant 143. Les bras 141 et 142 sont reliés à la tige 144 du vérin 138 au moyen de deux biellettes 145 et 146. Le vérin 138 est fixé à la base de l'ensemble basculant 143. Cet ensemble basculant 143 se présente sous la forme d'un U ; il est fixé sur un axe 147 articulé autour d'un axe horizontal 148 perpendiculaire au sens du déplacement du poisson. L'ensemble pivotant 143 est centré, avec les mâchoires 139-140 et leur système de commande, sur l'axe médian de l'installation.

L'axe 147 supportant l'ensemble basculant 143, est soutenu d'un côté par une plaque verticale 149 solidaire du bâti support 137 et, de l'autre par un vérin rotatif 150 lui-même soutenu par une autre plaque verticale 151 solidaire également dudit bâti support 137. Le système de pinces 17 est représenté figure 20 en traits forts dans la position active de préhension des viscères et en traits mixtes fins dans la position inactive, après basculement de l'ensemble pivotant 143. Sur la figure 22 le système de pinces 17 apparaît également en position active de préhension des viscères en traits forts, mais également en position mâchoires ouvertes en traits fins. Sur cette figure on distingue la sole 32 ainsi que les chaînes latérales de transfert 3 sur lesquelles sont fixés les supports 35 de guidage des indexs 34.

Sur les figures 23a et 23b on a représenté les mâchoires 139 et 140, respectivement. La mâchoire 139 en particulier comporte, sur sa périphérie supérieure, un tranchant 152 qui, en coopération avec la mâchoire 140, permet une découpe nette et précise des viscères derrière la tête du poisson ; par ailleurs les viscères se trouvent mieux pincés, entre les mâchoires, pour résister aux efforts d'arrachage exercés en premier lieu par le vérin rotatif 150 qui effectue le basculement du système de pinces 17 et, en second lieu par le vérin 153 de manoeuvre du chariot 133, lequel mouvement assure un déroulage des viscères jusqu'à leur arrachage complet. En fin de course du vérin 153, les mâchoires 139 et 140 relâchent les viscères qui tombent dans le bac 18 situé en amont du bac 23.

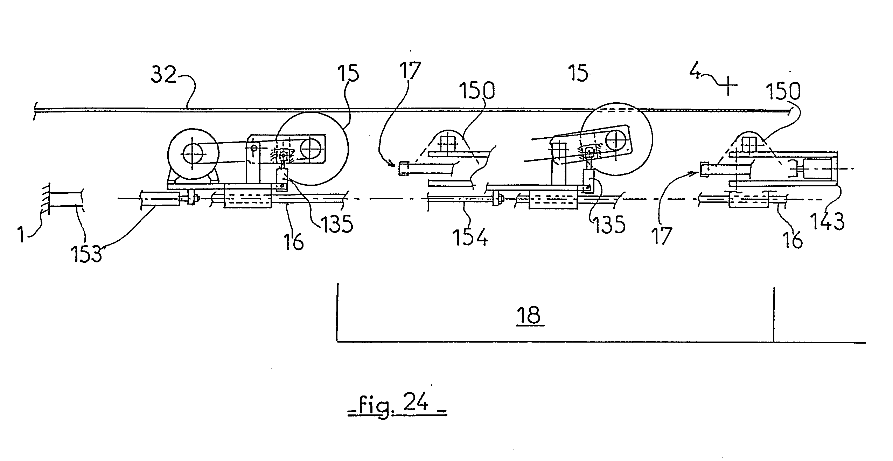

On a représenté, figure 24, les deux positions du chariot 133 : à gauche le chariot est dans sa position de départ pour effectuer le fendage du ventre du poisson, à droite le disque est arrivé en fin de course de fendage, au niveau de la tête du poisson. Ce déplacement du chariot 133 s'effectue comme indiqué précédemment, au moyen du vérin 153 dont le corps est solidaire du châssis de l'installation et de la tige 154, fixée sous le chariot 133. Pendant le fendage du ventre par le disque 15, le système de pinces 17 est en position basculée horizontale, inactive. Lorsque le fendage est terminé, le chariot 133 recule sur une distance suffisante pour amener le système de pinces 17 au niveau de l'arrière de la tête du poisson où le disque 15 a terminé sa course. Dans cette position le système de pinces est basculé au moyen du vérin 150, pour amener les mâchoires en position active de préhension des viscères derrière la tête. Dès que ces mâchoires ont pincé et découpé les viscères au moyen du tranchant 152, le vérin 150 bascule le système de pinces 17, en effectuant au début du basculement une traction sur les viscères, dans un mouvement circulaire dont la composante de départ est horizontale ; ensuite le chariot 133 est ramené au moyen du vérin 153 à la position de départ. Le système de pinces relâche alors les viscères du poisson qui tombe dans le bac 18 et le poisson est prêt pour être transféré au poste de finition.

**Revendications**

1.- Procédé de traitement de poisson du genre squale, caractérisé en ce qu'il consiste :
- à positionner le poisson à plat sur le ventre, tête en avant, au poste de réception (6) de l'installation de traitement ;
- à l'agripper par les yeux audit poste de réception, pour le transférer vers le poste de finition (180) ;
- à attraper une languette de peau (88) pour le dépecer par retournement depuis la tête, jusqu'à la queue, pendant son transfert du poste de réception (6) au poste de finition (180) ;
- à trancher la tête au poste de finition (180).

2.- Procédé de traitement de poisson du genre squale, selon la revendication 1, caractérisé en ce qu'il consiste, après avoir agrippé le poisson par les yeux au poste de réception (6), à transférer ledit poisson à un poste de préparation (9) où seront réalisées des opérations de découpage d'une languette de peau 88 derrière la tête et de tranchage des ouïes.

3.- Procédé de traitement de poissons du genre squale, caractérisé en ce qu'il consiste :
- à positionner le poisson à plat et sur le ventre, tête en avant, au poste de réception (6) de l'installation de traitement ;
- à l'agripper par les yeux audit poste de réception (6), pour le positionner dans un premier temps, au poste de préparation (9) où seront réalisées les opérations de découpage des nageoires dorsales, et de la peau derrière la tête en vue du dépeçage, et les opérations de fendage du ventre et d'éviscération, puis dans un deuxième temps, au poste de finition (18), où seront tranchées simultanément la tête et la queue ;

- à repérer sa longueur pendant son transfert du poste de réception (6) vers le poste de préparation (9) ;

- à dépecer le poisson pendant son transfert du poste de préparation (9) vers le poste de finition (18).

4.- Procédé de traitement de poissons selon la revendication 3, caractérisé en ce qu'il consiste, au poste de préparation (9), juste avant d'exercer une tension sur le poisson au moyen de pinces (10), à réaliser à la partie supérieure avant de la tête du poisson, une languette de peau (88), destinée à être agrippée par un système de pinces (19), pour l'opération de dépeçage.

5.- Procédé de traitement de poissons selon l'une des revendications 3 ou 4, caractérisé en ce que l'opération de prédécoupe des nageoires dorsales consiste à réaliser un cisaillage latéral desdites nageoires dans un plan sensiblement horizontal, et, en ce que l'opération de prédécoupe des ouïes consiste à réaliser un tranchage de chaque côté du corps du poisson, successivement, de haut en bas, dans des plans disposés en Vé de part et d'autre du plan vertical médian de l'installation, ces plans passant respectivement par les points arrière (89) de la languette de peau (88) et l'extrémité arrière inférieure (90) de la tête, de façon à réaliser une séparation totale de la peau par rapport à la tête.

6.- Procédé de traitement de poissons selon l'une quelconque des revendications 3 à 5, caractérisé en ce qu'il consiste à effectuer un fendage du ventre depuis la queue jusqu'à l'extrémité arrière inférieure de la tête, pour permettre l'éviscération par préhension des tripes au niveau de la tête au moyen d'un système de pinces (17).

7.- Procédé de traitement de poissons selon l'une quelconque des revendications 3 à 6, caractérisé en ce qu'il consiste à positionner les organes de découpe des nageoires dorsales en fonction de la longueur du poisson et de sa hauteur, et à positionner le système de tension de la queue en fonction de la position de l'organe de découpe de la nageoire dorsale arrière.

8.- Procédé de traitement de poissons selon l'une quelconque des revendications 3 à 7, caractérisé en ce qu'il consiste à dépecer le poisson jusqu'à la queue, selon la longueur repérée initialement au poste de réception (6).

9.- Installation de traitement de poisson du genre squale, pour la mise en oeuvre du procédé selon la revendication 1 caractérisée en ce qu'elle comprend :

- un poste de réception (6) où le poisson est positionné sur une chaîne de transfert (3), aux moyens d'index (34) ;

- des moyens (190) pour attraper et retenir temporairement une languette de peau (88), derrière la tête du poisson, en vue de réaliser le depeçage pendant le transfert du poisson du poste de réception (6) au poste de finition (180) ;

- un poste de finition (180) où s'effectue le tranchage de la tête.

10.- Installation de traitement de poissons du genre squales, selon l'une des quelconque des revendications 1 ou 2 et la revendication 9, caractérisée en ce qu'elle comprend, entre le poste de réception (6) et le poste de finition (180), un poste de préparation (9) comportant des moyens de découpage des ouïes du poisson et de découpage d'une languette à la partie supérieure dudit poisson, derrière sa tête.

11.- Installation de traitement de poissons pour la mise en oeuvre du procédé selon l'une des revendications 3 à 8, caractérisée en ce qu'elle comprend un poste de réception (6) où le poisson est positionné sur une chaîne de transfert (3), au moyen d'index (34) ; un poste de préparation (9) où s'effectuent les opérations de tranchage des nageoires, de découpage de la peau, de fendage et d'éviscération ; un poste de finition (180) où s'effectue la séparation de la tête et de la queue, du reste du corps du poisson.

12.- Installation de traitement de poissons selon la revendication 11, caractérisée en ce qu'elle comprend, au niveau du poste de réception (6), des moyens de repérage (8) de la longueur du poisson, mis en oeuvre lors de son transfert du poste de réception (6) au poste de préparation (9).

13.- Installation pour la préparation de poissons, selon l'une quelconque des revendications 10 à 12, caractérisée en ce qu'elle comprend des moyens de découpage d'au moins une languette (88) de peau sur la tête du poisson, au poste de préparation (9), et des moyens (19, 190) pour saisir cette languette (88), lors du transfert du poisson dudit poste de préparation (9) au poste de finition (180).

14.- Installation pour le traitement de poissons, selon l'une quelconque des revendications 9 à 13, caractérisée en ce qu'elle comprend, sous la chaîne de transfert (3) des bacs successifs (23, 24 et 26) destinés à recueillir respectivement, la peau, le corps et la tête du poisson, et, éventuellement, un bac (18) pour les viscères.

15.- Installation pour le traitement de poisson, selon l'une quelconque des revendications 9 à 13, caractérisée en ce qu'elle comprend, sous la chaîne de transfert (3), des dispositifs convoyeurs (231, 241, 261), destinés à recueillir respectivement la peau, le corps et la tête du poisson.

16.- Installation de traitement de poissons selon l'une des revendications 10 à 11, caractérisée en ce que au poste de réception (6), comporte un dispositif de centrage de la tête du poisson comprenant une butée (27) sur laquelle est disposé un contacteur (33) de détection de la présence du poisson, cette butée est montée sur un bras (28) pivotant sous l'effet d'un vérin (31) pour s'escamoter lors du transfert du poisson du poste de réception (6) au poste de préparation (9).

17.- Installation de traitement de poissons selon la revendications 9, 10 ou 11, caractérisée en ce que, au poste de réception (6), le poisson est rendu solidaire de la chaîne de transfert (3) au moyen d'index (34) en forme d'aiguil- les, coulissant dans des supports (35) et mis en place au niveau des yeux du poisson, sous l'effet de vérins (36) disposés de chaque côté de la chaîne de transfert (3).

18.- Installation de traitement de poissons selon la revendication 17, caractérisée en ce que les index (34) sont maintenus en position, pendant toute l'opération de traitement du poisson, au moyen de guides latéraux (38 et 39) qui verrouillent ou déverrouillent un disque (37) fixé à l'extrémité desdits index (34).

19.- Installation de traitement de poissons selon la revendication 11, caractérisée en ce qu'elle comporte, au poste de préparation (9) un système de pinces (10) destinées à agripper la queue du poisson pour le tendre, ce système de pinces est constitué d'un châssis mobile (43) longitudinalement, sous l'action d'un premier vérin (54) qui assure le positionnement du châssis en fonction de la longueur repérée du poisson, et d'un second vérin (56) qui, après agrippage de la queue du poisson par les mâchoires (40) de la pince (10) assure une tension sur la queue du poisson en déplaçant le châssis support du système de pinces (10) par rapport au châssis (1) de l'installation.

20.- Installation de traitement de poissons selon la revendication 11, caractérisée en ce que les moyens de cisaillage des nageoires dorsales sont constitués de couteaux (11 et 12) ; le couteau (11) de cisaillage des nageoires dorsales arrière, est mobile longitudinalement, pour se positionner en fonction de la longueur du poisson, repérée au poste de réception (6).

21.- Installation de traitement de poissons selon la revendication 20, caractérisée en ce que les couteaux de cisaillage (11 et 12), sont constitués d'une tête de cisaillage (58) mobile verticalement sous l'effet d'un vérin (56) à système bloqueur de tige ; cette tête de cisaillage supporte, au moyen d'une tige de guidage (65) et d'une semelle de glissement (66) un système flottant constitué de deux éléments (68 et 70) en forme de U avec des âmes (71 et 72) imbriquées ; les branches internes (74 et 75) de ces éléments en U supportent des lames (77 et 78) dont les tranchants sont en V pointu ; le mouvement des lames (77 et 78) est assuré au moyen d'un vérin dont le corps est solidaire de l'aile (74) de l'élément en U (68) et la tige (69) du vérin est solidaire de l'aile externe (76) de l'élément en U (70).

22.- Installation de traitement de poissons selon l'une des revendications 10 ou 11, caractérisée en ce qu'elle comprend, au poste de préparation (9), des couteaux latéraux (13) disposés symétriquement au plan médian de l'instal- lation ; ces couteaux comportant une lame (82) en forme d'équerre mobile sous l'effet d'un vérin (84), pour réaliser une découpe de la peau, depuis les points arrière (89) de la languette de peau (88) réalisée sur la tête du poisson, jusqu'à l'extrémité inférieure (90) de la tête.

23.- Installation de traitement de poissons selon l'une quelconque des revendications 10 à 11, caractérisée en ce que le découpage de la languette (88) est réalisé au moyen d'un disque (14) tournant dans un plan horizontal, fixé sur un parallélogramme déformable (93) qui supporte les moyens d'entrainement du disque ; ce parallélogramme (93) est solidaire d'un pivot (97) mobile sous l'effet d'un vérin (107) pour effectuer le déplacement, sensiblement selon l'axe longitudinal de l'installation, et réaliser la découpe de la languette (88).

24.- Installation de traitement de poissons selon la revendication 23, caractérisée en ce que le positionnement du disque (14) par rapport à la tête s'effectue au moyen d'un guide (106) disposé au-dessus du disque (14) ; l'ensemble mobile constitué par le parallélogramme (93), le disque et ses moyens d'entrainement, étant équilibré pour maintenir le disque (14) en position normale de découpe de la languette ; un vérin (105) interposé entre les branches supérieures (95) du parallélogramme et le pivot (97), assure l'escamotage du disque (14) pour le passage du poisson lors de son transfert du poste de préparation (9) au poste de finition (18).

25.- Installation de traitement de poissons selon l'une des revendications 18 ou 19, caractérisée en ce que le poste de finition comprend un système de pinces (19) pour réaliser l'opération de dépeçage du poisson ; ce système de pinces (19) est mobile longitudinalement sur une glissière (109) solidaire du châssis (1) de l'installation, il comprend un support (110) coulissant sur la glissière (109), mobile sous l'effet d'un vérin (112) ; ce support soutient une paire de mâchoires (114 et 115) ; la mâchoire (115) mobile est actionnée au moyen d'un vérin (116) et de deux biellettes (117 et 118).

26.- Installation de traitement de poissons selon l'une quelconque des revendications 9 à 11, caractérisée en ce que le poste de finition (18) comprend des couteaux (21 et 22) de tranchage de la queue et de la tête respectivement ; ces couteaux sont constitués d'une lame (123) mobile verticalement sous l'effet d'un vérin, d'une contre-lame (127) solidaire d'un bloc (128) fixé sur le châssis (1) de l'installation ; le tranchant (130) de la lame mobile (123) est incliné par rapport à l'horizontale.

27.- Installation de traitement de poissons selon la revendication 11, caractérisée en ce qu'elle comprend un organe de fendage du ventre du poisson constitué d'un disque (15) tournant dans le plan médian de l'installa- tion, ce disque est positionné sur un chariot mobile longitudinalement sous l'effet d'un vérin de manoeuvre (153), il est entrainé par un moteur (134) disposé sur le chariot mobile (133), le disque (15) se délace verticalement sous l'effet d'un vérin (135) interposé entre le bras (132) support dudit disque (15) et le chariot mobile (133).

28.- Installation de traitement de poissons selon la revendication 27, caractérisée en ce que le chariot mobile (133) supporte, au-delà du disque (15) un système de pinces (17) destinées à l'éviscération du poisson.

29.- Installation de traitement de poissons selon la revendication 28, caractérisée en ce que le système de pinces (17) d'éviscération est constitué d'un élément basculant (143) en forme de U contenant le système de commande par vérin (138) des mâchoires (139 et 140), cet ensemble basculant (143) est solidaire d'un arbre (147) mobile sous l'effet d'un vérin rotatif (150) solidaire du chariot support (133).

0263738

_fig.1_

_fig.2_

_fig.2a_

0263738

_fig.3_

0263738

_fig.5_

_fig.4_

0263738

_fig.7_

_fig.6_

0263738

_fig.11_

_fig.10_

_fig.9_

_fig.8_

0263738

_fig. 12_

_fig. 9a_

_fig. 8a_

0263738

_fig.13_

_fig.13a_

_fig.14_

0263738

_Fig. 15_

_Fig. 16_

_fig.17_

0263738

_fig.18_

_fig.19_

_fig.22_

0263738

_fig.20_

_fig. 21_

_fig.23a_

_fig.23b_

_fig. 24 _

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 314 877 (ARMELLINI) --- | | A 22 C 25/00 A 22 C 25/14 |
| A | GB-A-2 056 116 (BAADER) --- | | |
| A | DE-A-2 735 302 (ARENCO) --- | | |
| A | DE-A-1 429 903 (FISADCO) --- | | |
| A | US-A-3 187 375 (WILLIAMSON) ----- | | |

**DOMAINES TECHNIQUES RECHERCHES (Int. Cl.4)**

A 22 C

Le présent rapport a été établi pour toutes les revendications

| Lieu de la recherche | Date d'achèvement de la recherche | Examinateur |
|---|---|---|
| LA HAYE | 21-12-1987 | DE LAMEILLIEURE D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)